(19) Europäisches Patentamt
European Patent Office
Office européen des brevets

(11) Publication number: **0 154 475 B1**

(12) **EUROPEAN PATENT SPECIFICATION**

(45) Date of publication of patent specification: **19.04.89**

(51) Int. Cl.⁴: **C 07 F 9/38**, C 07 C 101/04, C 02 F 5/14, A 61 K 49/02

(21) Application number: **85301238.3**

(22) Date of filing: **25.02.85**

(54) **Bis(aminomethyl)bicyclo(2.2.1)heptanes useful as metal ion control agents and radioactive metals complexed therewith.**

(30) Priority: **27.02.84 US 584071**
**27.02.84 US 584070**

(43) Date of publication of application:
**11.09.85 Bulletin 85/37**

(45) Publication of the grant of the patent:
**19.04.89 Bulletin 89/16**

(84) Designated Contracting States:
**BE CH DE FR GB IT LI NL SE**

(56) References cited:
**US-A-2 599 807**
**US-A-2 609 390**
**US-A-4 187 284**

The file contains technical information submitted after the application was filed and not included in this specification

(73) Proprietor: **THE DOW CHEMICAL COMPANY**
**2030 Dow Center Abbott Road P.O. Box 1967**
**Midland Michigan 48640-1967 (US)**

(72) Inventor: **Simon, Jaime**
**Rt. 1 Box 120-G**
**Angleton Texas 77515 (US)**
Inventor: **Wilson, David A.**
**229 San Saba**
**Richwood Texas 77531 (US)**
Inventor: **Volkert, Wynn A.**
**2203 Garden Drive**
**Columbia Missouri 65212 (US)**
Inventor: **Crump, Druce K.**
**142 Oyster Creek Drive No. 48**
**Lake Jackson Texas 77566 (US)**

(74) Representative: **Burford, Anthony Frederick et al**
**W.H. Beck, Greener & Co. 7 Stone Buildings**
**Lincoln's Inn**
**London WC2A 3SZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

Norbornane is a cyclic compound found in or derivable from the residual heavy hydrocarbons in the bottoms of distillation towers in light hydrocarbon production facilities. Various derivatives of norbornane have been made, among them the bis(methylamine). It is this compound which has been phosphonomethylated which is the subject of the present invention.

Methylenephosphonic acid substituted alkylene di- and polyamines and their use as chelating agents are disclosed in US 2599807.

It is well-known that amines such as ethylenediamine and diethylenetriamine can be reacted with formaldehyde and phosphorus acid to obtain methylene phosphonate derivatives of the amine in which the methylene phosphonate group

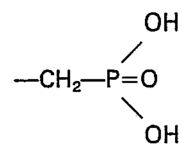

substitutes for the amine hydrogens (US 3,288,846).

The use of methylenephosphonic acid substituted alkylene polyamines for metal ion control at less than stoichiometric amounts was suggested in a patent (US 2,609,390) issued in 1952. Later a water-dispersible polymeric amine chelating agent which included alkylene phosphonate derivatives was indicated as having "threshold" effects in scale inhibition applications (see US 3,331,773), this term being used to describe the use of the agent in less than stoichiometric amounts. The diamine and polyamine methylenephosphonate derivatives are taught and claimed in US 3,336,221 and 3,434,969, respectively. Some of the products disclosed in these two patents are available commercially and are recommended as scale inhibitors when applied in threshold amounts.

Other patents which disclose heterocyclic nitrogen-containing compounds which are useful as chelating agents and may be employed in threshold amounts are US 3,674,804; 3,720,498; 3,743,603; 3,859,211; and 3,954,761. Some of the compounds included therein are heterocyclic compounds having the formulas:

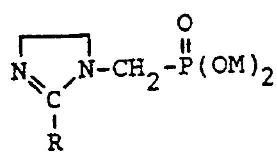 ,

wherein R is hydrogen or alkyl and M is hydrogen, alkali metal, ammonium or a di- or triethanolamine radical;

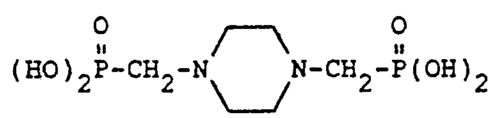 ;

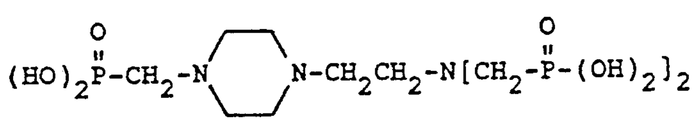

and

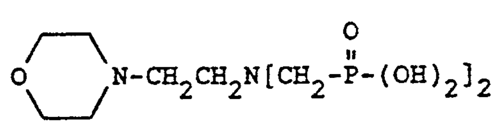 .

Certain phosphonic acid derivatives of the aliphatic acids can be prepared by reacting phosphorous acid with acid anhydrides or acid chlorides, e.g., the anhydrides or chlorides of acetic, propionic and valeric acids. The compounds prepared have the formula

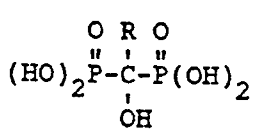

wherein R is a lower alkyl radical having 1 to 5 carbon atoms. The method of making and use of these

products is described in US 3,214,454. The use of threshold amounts to prevent calcium precipitation is disclosed and claimed therein.

It has now been discovered that new chelating and threshold agents for inhibiting precipitation of metal ions can be made from the bis(methylamine) derivatives of norbornane. This compound has the structure

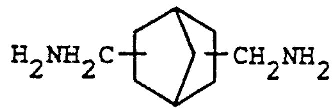 .

This compound is also known by the more formal name of 2(3),5(6)-bis[aminomethyl]bicyclo(2,2,1)heptane. Its derivatives are those with various substituents replacing the primary amine hydrogens.

A new class of compounds is formed when norbornane bis(methylamine) is reacted with certain compounds, e.g., formaldehyde and phosphorous acid will form methylenephosphonic acid derivatives. These new compounds have the structure

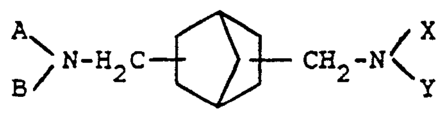

Formula I

wherein substituents A, B, X and Y each are independently selected from radicals consisting of hydrogen, hydroxyalkyl (wherein the alkyl group contains 2—6 carbon atoms), methylenephosphonic, methylene-, ethylene- and propylenesulfonic, carboxylic acid radicals (having 2—4 carbon atoms) and the alkali or alkaline earth metal, ammonia and amine salts of any of the phosphonic, sulfonic or carboxylic acid derivatives. At least one of the substituents must be other than a hydrogen.

Methods for obtaining hydroxylalkyl, sulfonic acid or carboxylic acid derivatives of compounds of Formula I are well-known in the art.

The method for substituting a hydrogen of an amine with a hydroxyalkyl group by reacting with an epoxide, e.g., ethylene or propylene oxide, is taught in US 3,398,198.

The sulfonic acid radical can be substituted for an amine hydrogen by reacting the amine with a mixture of sodium bisulfite and formaldehyde to obtain a methylenesulfonic acid group substituent on the nitrogen of the amine compound. This reaction is taught in "Preparation and Propeties of Aminomethylenesulfonic Acids", *J. Am. Chem. Soc.,* 77, 5512—15 (1955). Other alkylsulfonic acid derivatives can be made by reacting the amine with chloroalkylsulfonic acids.

The carboxylic acid group may be substituted for an amine hydrogen by reacting the amine in aqueous solution with appropriate nitrile such as glycolonitrile and acrylonitrile in the presence of excess caustic (NaOH) and then converting the salt form of the acid radical into the free carboxylic acid radical according to the well-known procedure.

With respect to the making of amine salts of the acid radicals, the reaction is well-known. Inn Richter's 3rd edition (1952) of his *Textbook of Organic Chemistry,* page 246, it is stated "Amines of all classes, like ammonia, are basic substances and readily react with acids to form ionizable salts."

The present invention also concerns the use of bis(aminomethyl)bicyclo[2.2.1]heptanes of Formula I as complexing agents for radionuclides for imagining the skeletal system of animals.

The first radionuclide to be widely used for one scanning was Sr-85. Strontium-85 is rapidly accumulated by bone after intravenous administration and images of the skeletal system are possible. However, Sr-85 has a long physical half-life (65 days) and a long biological half-life (~800 days) which limits the levels which can be administered. Also, the high energy of the gamma photon emitted (514 kev) is difficult to collimate.

Fluorine-18 has also been used to image the skeletal system. It is a positron emitter with a half-life of 1.85 hr. Although F-18 has good physical properties for imaging, it has some serious drawbacks. Fluorine-18 is cyclotron produced and, therefore, expensive. Also its distribution is limited due to its short half-life.

Many organ scanning agents, including those for the skeletal system, have now been replaced with complexes of Technetium-99m. This nuclide has ideal physical properties ($T\frac{1}{2}$ = 6 hr, gamma photon of 141 kev) for imaging. In addition, it is readily available because of the Mo-99/Tc-99m generators. Thus, the majority of imaging is now done using Tc-99m.

Technetium-99m is obtained from generators in the +7 oxidation state as the pertechnetate ion ($TcO_4^-$). In order to form a complex, Tc must be in a lower oxidation state, i.e., +3, +4, or +5. Although other reducing agents can be used, $Sn^{2+}$ has been employed most often. Thus Tc-99m complexes can be formed by reduction of $TcO_4^-$ using $Sn^{2+}$ in the presence of a complexing agent. This is usually done in an aqueous saline solution that is suitable for intravenous injection.

Commercial complexing agents are sold as "radiopharmaceutical kits". A "kit" consists of an evacuated vial containing the complexing agent, a reducing agent, and possibly a buffer and stabilizers. To prepare the Tc-99m complexes, a few milliliters of sodium pertechnetate solution in saline is injected into the vial. An adequate amount of the resultant solution is used for imaging.

Subramanion et al. (Radiology, Vol. 99, pages 192—196, 1971) reported the use of a complex of Tc-99m and an inorganic polyphosphate for skeletal imaging. Several others have reported inorganic polyphosphates as useful for this purpose (see US 3,852,414; 4,016,249; and 4,082,840). The use of pyrophosphate (PYP) for bone imaging has also been taught (US 3,851,044; 3,931,396; and 4,075,314). The Tc-phosphates had fair success but have been replaced by Tc-phosphonates.

Complexes of Tc-99m with phosphonic acids show higher bone uptake with faster blood clearance than Tc-99m/phosphate complexes. Phosphonic acids which are considered the best bone scanning agents when complexed with Tc-99m include hydroxyethanediphosphonate (EHDP), methylenediphosphonate (MDP) and hydroxymethylenediphosphonate (see US 3,983,227; 3,989,730; 4,032,625 and also *J. Nucl. Med.,* 21, page 767, Radiology 136, page 209; *J. Nucl. Med.,* 21, page 961; Radiology 136, page 747). US 4187284 discloses the use of Tc-99m complex with triethylene tetramine hexa (methylene phophoric acid) for radiographic bone scanning.

New stable complexing agents for Tc-99m which are derivatives of bicyclo[2.2.1]heptane bis-(methylamines) have been found which are useful in imaging the skeletal system in animals. These new complexing agents are represented by Formula I above. The comlexes readily and efficiently clear through the kidneys with large amounts being taken up in the bone. The ratio of uptake in bone to that in soft tissue is high.

The new complexing agents were found to form stable Tc-99m complexes when $Sn^{2+}$ was added to a saline solution containing the complexing agent. The complex clears readily through the kidneys with a large amount being taken up by the skeletal system and very little was left in the blood and soft tissue.

Therefore, since the ratio of uptake in bone to that of surrounding soft tissue is high, the images were sharp and clear. Ratios of activity in bone/soft tissue and bone/blood compare favourably to commercial Tc-bone radiopharmaceuticals.

The following examples illustrate the preparation and use of the new compounds of the invention. Identification of the compounds is made by reference to the above Formula I.

Example 1

Distilled water (10 g) and $H_3PO_3$ (9.9 g) were weighed into a 50 ml round-bottom flask equipped with a water-cooled condenser, a thermometer, a stirring bar, and an addition funnel. Concentrated HCl (11.8 g) was then added and 3.9 g of 2(3),5(6)-bis-[aminomethyl]bicyclo(2,2,1)heptane was slowly added while stirring. The solution was heated at reflux for approximately one hour and a 37 percent aqueous formaldehyde solution (8.51 g) was added over a period of 2.5 hours. The solution was heated for an additional 3 hours at reflux. The compound formed was the completely phosphonomethylated norbornane derivative wherein each of A, B, X and Y were methylenephosphonic acid groups, $—CH_2PO_3H_2$.

Example 2

The procedure for Example 1 was followed for the addition of 3 mole equivalents of formaldehyde (24.3 g of a 37 percent solution) and phosphorous acid (25.1 g) to one mole equivalent of 2(3),5(6)-bis[aminomethyl]bicyclo(2,2,1)heptane (15.2 g). The resultant solution was neutralized with NaOH (aq) and one mole equivalent of glycolonitrile (14.7 g of a 38 percent solution) and NaOH (13.8 g of a 33.3 percent solution) was added. The compound formed was the sodium salt of the bicycloheptane derivative which had an average of three methylenephosphonic acid groups and one carboxymethyl group per molecule as the A, B, X and Y substituents.

Example 3

A quantity (15.2 g, 0.1 mole) of 1(2),4(5)-bis[aminomethyl]bicyclo(2,2,1)heptane was placed into a stainless steel beaker and 50 ml of distilled water was added, followed by the addition 37 ml of 50 percent NaOH. This solution was heated to about 70°C with stirring and carboxymethylation accomplished by adding dropwise 58.9 g of 38 percent glycolonitrile while still heating, over a one-hour period. After about 15 minutes of the addition, the temperature was at reflux and $NH_3$ was being liberated. Distilled water was added periodically to replace the evaporated water. After completing the addition of glyconitrile, the solution was heated for an additional hour while stirring and purging with $N_2$. The compound formed was the tetracarboxymethyl derivative wherein A, B, X and Y were $CH_2—COONa$.

The utility of the compounds of the invention was ascertained by conducting scale inhibition tests according to National Association of Corrosion Engineers (NACA) test method TM—03—74. The calcium carbonate scale inhibition results are shown in Table I and compared with a commercially available scale inhibitor, aminotri(methylenephosphonic acid). Calcium sulfate scale inhibition was also tested and results are shown in Table II.

TABLE I

Calcium Carbonate Scale Inhibition Data

| Compound | ppm Concentration* | % of $Ca^{++}$ Remaining in Solution at 24 hr | 48 hr | 72 hr |
|---|---|---|---|---|
| None | -- | 54 | 53 | 52 |
| Example 1 | 10 | 96 | 94 | 86 |
| Example 2 | 10 | 94 | 82 | 79 |
| aminotri(methylenephosphonic acid) | 10 | 94 | 82 | 79 |

*ppm based on active acid

TABLE II

Calcium Sulfate Scale Inhibition Data

| Compound | ppm Concentration* | % of $Ca^{++}$ Remaining in Solution at 24 hr | 48 hr | 72 hr |
|---|---|---|---|---|
| None | - | 67 | 65 | 65 |
| Example 1 | 1 | 100 | 99 | 99 |
| Example 2 | 1 | 99 | 99 | 98 |
| aminotri(methylenephosphonic acid) | 1 | 84 | 80 | 77 |

*ppm based on active acid

The usefulness of the compounds of the present invention to act as chelating agents was demonstrated by titrating the compounds with standard copper solution in the presence of chrome azurol-S indicator. The compound of Example 1 was titrated and found to complex approximately 1.5 moles of copper per mole of ligand. This compound can function as either a threshold compound or a chelating agent.

It should be recognized that the compounds of the invention can have several different groups as the A, B, X and Y substituents on the same molecule, but that when mixed derivatives are obtained, it is not usually possible to direct or predict which amine hydrogens are substituted. The product, in all probability, contains a mixture of isomeric compounds.

While all of the compounds will chelate metal ions, only those which contain at least one methylenephosphonic acid group or its salt will provide a threshold effect.

Example 4

On hundred µl of the solution prepared in Example 1 was placed in a vial and one ml of 0.9 percent saline (aq) was added. The pH of the solution was adjusted to 3.5 using dilute NaOH and HCl and 0.1 ml of a freshly eluted $TcO_4^-$ solution was added. This was followed by the addition of 100 µl of a saturated stannous tartrate solution. Elution of paper chromatography strips with saline and acetone showed less than 5 percent of the activity as $TcO_4^-$ or reduced uncomplexed Tc.

The above Tc-complex (50 µl, ~1mCi) was injected in the tail vein of rats. Scintillation scans of the anesthetized rats were taken at several intervals post injection. The bone scans were of high quality implying the use of this as a tool for human patients.

Example 5

The Tc-complex prepared in Example 4 (50 µl, ~1mCi) was injected in the tail vein of mice. The mice were killed at different times post-injection, the organs and tissues removed, and the radiation measured with a NaI counter. The activity was found primarily in the bone, and bladder with no other organs showing a high affinity for the complex. At 120 minutes post-injection, the bone, muscle, and liver had, respectively, 5.1, <0.01, and 0.24 percent dose/g of the activity.

Example 6

The Tc-complex of Example 4 (50 µl, ~1mCi) was injected into the tail vein of a series of rats. The animals were killed after 2 hours and the radiation from several tissues was quantitated using a NaI scintillation counter. Table III below shows the results compared to Tc-MDP (methylenediphosphonate), commercial Tc-bone agent, evaluated in an identical manner.

TABLE III

Percent Dose/Organ of Several Tissues in Rats

| Organ | Complex of Example 4 | Commercial Agent (Tc-MDP) |
|---|---|---|
| Skeleton | 41.7 | 39.4 |
| Blood | 0.23 | 0.27 |
| Urine | 63.1 | 50.9 |
| | Ratios | |
| Bone/Blood | 181 | 146 |
| Bone/Muscle | 384 | 150 |

Example 7

The complex of Example 4 was injected in the ear vein of a series of rabbits. The rabbits were killed in 3 hours after injection. The radiation of several tissues was quantified by counting using a NaI scintillation counter. Table IV below shows the results compared to those of a commercial Tc-bone agent, MDP.

TABLE IV

Percent Dose X 1 Percent Body Weight/gram in Several Tissues in Rabbits

| Organ | Complex of Example 4 | Commercial Agent (Tc-MDP) |
|---|---|---|
| Femur | 5.3 | 5.7 |
| Liver | 0.07 | 0.11 |
| Muscle | 0.03 | 0.05 |
| Blood | 0.10 | 0.05 |
| | Ratios | |
| Femur/Blood | 53 | 44 |
| Femur/Muscle | 177 | 114 |

Scintillation scans of the above rabbits 2 hours after injections with the complex of Example 4 compared favourably with those using Tc-MDP commercial kits.

**Claims**

1. A compound having the formula

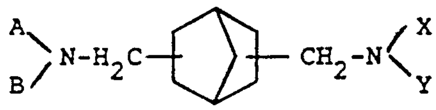

wherein substituents A, B, X and Y each are independently selected from hydrogen, hydroxyalkyl (wherein the alkyl group contains 2—6 carbon atoms), methyl-enephosphonic, methylene-, ethylene- and propylene-sulfonic, alkyl- carboxylic acid radicals (having 2—4 carbon atoms) and the alkali or alkaline earth metal, ammonium and amine salts of any of the phosphonic, sulfonic or carboxylic acid derivatives, and wherein at least one of A, B, X and Y is other than a hydrogen.

2. A compound as claimed in Claim 1, wherein at least one of A, B, X and Y is a methylenephosphonic acid radical or a salt thereof.

3. A compound as claimed in Claim 2, wherein each of A, B, X and Y are a methylenephosphonic acid radical of a salt thereof.

4. A compound as claimed in Claim 2, wherein two of A, B, X and Y each are a methylenephosphonic acid radical or a salt thereof and each of the remaining two is hydrogen.

5. A compound as claimed in Claim 2, wherein three of A, B, X and Y each are a methylenephosphonic acid radical or a salt thereof and the remaining one is carboxymethyl or a salt thereof.

6. A compound as claimed in Claim 1, wherein each of A, B, X and Y is a carboxymethyl radical or a salt thereof.

7. A compound as claimed in any of Claims 2 to 6, wherein all the acid groups are in salt form.

8. A compound as claimed in one of Claims 2 to 7, in the form of an alkali metal or alkaline earth metal salt.

9. A compound as claimed in Claim 8, wherein the salt is a sodium salt.

10. A process for inhibiting the precipitation of metal ions from their aqueous solutions by adding to said solutions in less than stochiometric amounts, based on the metal ions present, a phosphonic acid derivative, characterised in that said derivative is a compound as claimed in any one of Claims 2 to 5 and 7 to 9.

11. A process for chelating metal ions in an aqueous solution thereof by adding thereto at least a stoichiometric amount based on the metal ions present of a derivative, characterised in that said derivative is a compound as claimed in any one of Claims 1 to 9.

12. A bone seeking complex of a radioactive nuclide and an amine derivative, characterised in that said derivative is a compound as claimed in any one of Claims 1 to 9.

13. A complex as claimed in Claim 12, wherein the radioactive nuclide is Technetium-99m.

14. A composition comprising a complex as claimed in Claim 12 or Claim 13 and a reducing agent in a saline solution.

15. A composition as claimed in Claim 14, wherein the reducing agent is $Sn^{2+}$.

**Patentansprüche**

1. Verbindung mit der Formel

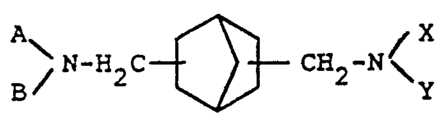

worin die Substituenten A, B, X und Y jeweils unabhängig voneinander ausgewählt sind aus Wasserstoff, Hydroxyalkyl (worin die Alkylgruppe 2 bis 6 Kohlenstoffatome enthält), Methylen-phosphon-, Methylen-, Ethylen- und Propylen-sulfon-, Alkyl-carbon-säureste (mit 2 bis 4 Kohlenstoffatomen) und die Alkali- oder Erdalkalimetall-, Ammonium- und Aminsalze jeder der Phosphon-, Sulfon- oder Carbonsäurederivate, und worin mindestens eines von A, B, X und Y von Wasserstoff verschieden ist.

2. Verbindung nach Anspruch 1, worin mindestens eines von A, B, X und Y ein Methylenphosphonsäurerest oder ein Salz davon ist.

3. Verbindung nach Anspruch 2, dadurch gekennzeichnet, daß jedes von A, B, X und Y ein Methylenphosphonsäurerest oder ein Salz davon ist.

4. Verbindung nach Anspruch 2, worin zwei von A, B, X und Y jeweils ein Methylenphosphonsäurerest oder ein Salz davon sind und jedes der verbleibenden zwei Wasserstoff ist.

5. Verbindung nach Anspruch 2, worin drei von A, B, X und Y jeweils ein Methylenphosphonsäurerest oder ein Salz davon sind und das verbleibende Carboxymethyl oder ein Salz davon ist.

6. Verbindung nach Anspruch 1, worin jedes von A, B, X und Y ein Carboxymethylrest oder ein Salz davon ist.

7. Verbindung nach einem der Ansprüche 2 bis 6, worin alle Säuregruppen in der Salzform vorliegen.

8. Verbindung nach einem der Ansprüche 2 bis 7, in Form eines Alkalimetall- oder Erdalkalimetallsalzes.

9. Verbindung nach Anspruch 8, worin das Salz ein Natriumsalz ist.

10. Verfahren zur Inhibierung der Fällung von Metallionen aus ihren wäßrigen Lösungen durch Zugabe eines Phosphonsäurederivats zu den Lösungen in weniger als stöchiometrischen Mengen, auf Basis der anwesenden Metallionen, dadurch gekennzeichnet, daß das Derivat eine Verbindung nach einem der Ansprüche 2 bis 5 und 7 bis 9 ist.

11. Verfahren zur Chelatierung von Metallionen in einer wäßrigen Lösung davon, durch Zugabe eines Derivats hierzu in mindestens einer stöchiometrischen Menge, auf Basis der anwesenden Metallionen, dadurch gekennzeichnet, daß das Derivat eine Verbindung nach einem der Ansprüche 1 bis 9 ist.

12. Knochen-suchender Komplex eines radioaktiven Nuklids und eines Aminderivats, dadurch gekennzeichnet, daß das Derivat eine Verbindung nach einem der Ansprüche 1 bis 9 ist.

13. Komplex nach Anspruch 12, worin das radioaktive Nuklid Technetium-99m ist.

14. Zusammensetzung, umfassend einen Komplex nach einem der Ansprüche 12 oder 13 und ein Reduktions-mittel in einer Kochsalzlösung.

15. Zusammensetzung nach Anspruch 14, worin das Reduktionsmittel $Sn^{2+}$ ist.

**Revendications**

1. Composé de formule

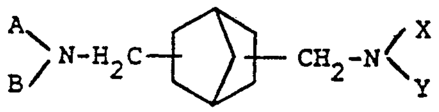

où les substituants A, B, X et Y sont choisis, chacun indépendamment, d'entre l'hydrogène les groupes hydroxyalkyle (où le groupe alkyle contient 2—6 atomes de carbone), les groupes acide méthylènephosphonique, acide méthylène- éthylène- et propylène-sulfonique, les groupes acide alkyl-carboxylique (comportant 2—4 atomes de carbone) et les sels de métaux alcalins out alcalino-terreux, d'ammonium et d'amines de l'un quelconque des dérivés acid phosphonique, sulfonique ou carboxylique, et où au moins l'un des substituants A, B, X et Y est autre qu'un hydrogène.

2. Composé selon la revendication 1, où au moins l'un des substituants A, B, X et Y est un groupe acide méthylènephosphonique, ou un de ses sels.

3. Composé selon la revendication 2, où chacun des substituants A, B, X et Y est un groupe acide méthylènephosponique, ou un de ses sels.

4. Composé selon la revendication 2, où deux des substituants A, B, X et Y sont un groupe acide méthylènephosphonique, ou un de ses sels, et chacun des deux substituants restants est un hydrogène.

5. Composé selon la revendication 2, où trois des substituants A, B, X et Y sont un groupe acide méthylènephosphonique, ou un de ses sels, et le substituant restant est un groupe car boxyméthyle ou un de ses sels.

6. Composé selon la revendication 1, où chacun des substituants A, B, X et Y est un groupe car boxyméthyle, ou un de ses sels.

7. Composé selon l'une quelconque des revendications 2 à 6, dans lequel tous les groupes acide sone sous forme de sel.

8. Composé selon l'une quelconque des revendications 2 à 7, qui est sous la forme d'un sel de métal alcalin ou alcalino-terreux.

9. Composé selon la revendication 8, dans lequel le sel est un sel de sodium.

10. Procédé pour inhiber la précipitation des ions métalliques à partir de leurs solutions aqueuses, par addition auxdites solutions, dans des proportions inférieures aux proportions stoechiométriques, calculées par rapport aux ions métalliques présents, d'une dérivé acide phosphonique, caractérisé en ce que ledit dérivé est un composé selon l'une quelconque des revendications 2 à 5 et 7 à 9.

11. Procédé pour chélateur des ions métalliques dans une solution aqueuse, en y ajoutant au moins la quantité stoechiométrique, calculée par rapport aux ions métalliques présents, d'un dérivé, caractérisé en ce que ledit dérivé est un composé selon l'une quelconque des revendications 1 à 9.

12. Complexe, présentant une affinité pour les os, d'un nucléide radioactif et d'un dérivé aminé, caractérisé en ce que ledit dérivé est un composé selon l'une quelconque des revendications 1 à 9.

13. Complexe selon la revendication 12, dans lequel le nucléide radioactif est le Technétium-99m.

14. Composition comprenant un complexe selon la revendication 12 ou 13 et un agent réducteur dans une solution physiologique.

15. Composition selon la revendication 14, das laquelle l'agent rédeucteur est le $Sn^{2+}$.